# EUROPEAN PATENT SPECIFICATION

(11) **EP 3 385 397 B1**
(45) Date of publication and mention of the grant of the patent: **10.04.2024**
(21) Application number: 16870734.7
(22) Date of filing: 30.11.2016
(51) Int. Cl.: C21D 8/12, B23K 15/00, B23K 26/352, C22C 38/60, C22C 38/02, C23C 8/02, C23C 8/26, C23C 8/38, C23C 8/50, C23C 8/80, C22C 38/04, C22C 38/06, H01F 1/16, C21D 6/00, C23C 8/24, C22C 38/00

(54) **METHOD FOR MANUFACTURING GRAIN-ORIENTED ELECTROMAGNETIC STEEL SHEET**
VERFAHREN ZUR HERSTELLUNG EINES KORNORIENTIERTEN ELEKTROMAGNETISCHEN STAHLBLECHS
PROCÉDÉ DE FABRICATION DE TÔLE D'ACIER ÉLECTROMAGNÉTIQUE À GRAINS ORIENTÉS

(30) Priority: 04.12.2015 JP 2015237995
(43) Date of publication of application: 10.10.2018
(73) Proprietor: JFE Steel Corporation, Tokyo 100-0011 (JP)
(72) Inventor: TAKENAKA, Masanori, Tokyo 100-0011 (JP); HAYAKAWA, Yasuyuki, Tokyo 100-0011 (JP); IMAMURA, Takeshi, Tokyo 100-0011 (JP); EHASHI, Yuiko, Tokyo 100-0011 (JP)
(74) Representative: Hoffmann Eitle
(86) International application number: PCT/JP2016/085616
(87) International publication number: WO 2017/094797

(56) References cited:
- EP-A1- 2 902 507
- EP-A2- 1 281 778
- WO-A1-2015/045397
- CN-A- 103 725 995
- JP-A- 2003 193 131
- JP-A- 2003 193 135
- JP-A- 2003 193 135
- JP-A- 2003 253 335
- JP-A- 2012 102 344
- JP-A- 2014 208 907
- JP-A- 2015 168 869
- JP-A- 2016 089 194
- JP-A- 2016 156 069
- KR-A- 20120 071 823

## Description

### TECHNICAL FIELD

The present disclosure relates to a method of producing a grain-oriented electrical steel sheet having crystal grains of steel with the {110} plane in accord with the sheet plane and the <001> orientation in accord with the rolling direction, in Miller indices.

### BACKGROUND

A grain-oriented electrical steel sheet is a soft magnetic material mainly used as an iron core material of an electrical device such as a transformer or a generator, and has crystal texture in which the <001> orientation which is the easy magnetization axis of iron is highly aligned with the rolling direction of the steel sheet. Such texture is formed through secondary recrystallization of preferentially causing the growth of giant crystal grains in the (110)[001] orientation which is called Goss orientation, when secondary recrystallization annealing is performed in the process of producing the grain-oriented electrical steel sheet.

A conventional process for producing such a grain-oriented electrical steel sheet is as follows. A slab containing about 3 mass% Si and an inhibitor component such as MnS, MnSe, and AlN is heated at a temperature exceeding 1300 °C to dissolve the inhibitor component. The slab is then hot rolled, and optionally hot band annealed. The sheet is then cold rolled once, or twice or more with intermediate annealing performed therebetween, to obtain a cold rolled sheet with a final sheet thickness. The cold rolled sheet is then subjected to primary recrystallization annealing in a wet hydrogen atmosphere, to perform primary recrystallization and decarburization. After this, an annealing separator mainly composed of magnesia (MgO) is applied to the primary recrystallization annealed sheet, and then final annealing is performed at 1200 °C for about 5 h to develop secondary recrystallization and purify the inhibitor component (for example, US 1965559 A (PTL 1), JP S40-15644 B2 (PTL 2), JP S51-13469 B2 (PTL 3)).

As mentioned above, the grain-oriented electrical steel sheet is conventionally produced by the technique of containing a precipitate (inhibitor component) such as MnS, MnSe, and AlN in the slab stage, heating the slab at a high temperature exceeding 1300 °C to dissolve the inhibitor component, and causing fine precipitation in a subsequent step to develop secondary recrystallization.

Thus, high-temperature slab heating exceeding 1300 °C is necessary in the conventional grain-oriented electrical steel sheet production process, which requires very high production cost. The conventional process therefore has a problem of being unable to meet the recent demands to reduce production costs.

To solve this problem, for example, JP 2782086 B2 (PTL 4) proposes a method of containing acid-soluble Al (sol.Al) in an amount of 0.010 % to 0.060 % and, while limiting slab heating to low temperature, performing nitriding in an appropriate nitriding atmosphere in a decarburization annealing step so that (Al, Si)N is precipitated and used as an inhibitor in secondary recrystallization.

Here, (Al, Si)N disperses finely in the steel, and functions as an effective inhibitor. In the steel sheet after subjection to the nitriding treatment by the above-mentioned production method, a precipitate (Si₃N₄ or (Si, Mn)N) mainly containing silicon nitride is formed only in the surface layer. In the subsequent secondary recrystallization annealing, the precipitate mainly containing silicon nitride changes to Al-containing nitride ((Al, Si)N or AlN) which is thermodynamically more stable. Here, according to Y. Ushigami et al. "Precipitation Behaviors of Injected Nitride Inhibitors during Secondary Recrystallization Annealing in Grain Oriented Silicon Steel" Materials Science Forum Vols. 204-206 (1996) pp. 593-598 (NPL 1), Si₃N₄ present in the vicinity of the surface layer dissolves during heating in the secondary recrystallization annealing, whereas nitrogen diffuses into the steel and, when the temperature exceeds 900 °C, precipitates as Al-containing nitride approximately uniform in the sheet thickness direction, with it being possible to obtain grain growth inhibiting capability (inhibition effect) throughout the sheet thickness. With this technique, the same amount and grain size of precipitate can be obtained in the sheet thickness direction relatively easily, as compared with the precipitate dispersion control using high-temperature slab heating.

Meanwhile, a technique of developing secondary recrystallization without containing any inhibitor component in the slab is also under study. For example, JP 2000-129356 A (PTL 5) describes a technique (inhibitorless method) that enables secondary recrystallization without containing any inhibitor component.

EP 2 902 507 A1 (PTL 6) describes a manufacturing method of oriented silicon steel having high magnetic induction comprising smelting and continuously casting to obtain a slab, wherein the content of N is controlled at 0.002-0.014 wt% in the smelting stage; hot-rolling; cold-rolling; decarbonizing and annealing; nitriding treatment, wherein the infiltrated nitrogen content [N]_{D} is controlled to satisfy the formula: 328-0.14a-0.85b-2.33c≤[N]_{D}≤362-0.16a-0.94b-2.57c, wherein a is the content of Als in the smelting step, with the unit of ppm; b is the content of N element, with the unit of ppm; and c is the primary grain size, with the unit of µm; coating a surface with a magnesium oxide coating and annealing; and applying an insulating coating.

WO 2015/045397 A1 (PTL 7) describes a method of producing a grain-oriented electrical steel sheet by heating a steel slab having a composition containing by mass% C: 0.0005% to 0.005%, Si: 2.0% to 4.5%, Mn: 0.005% to 0.3%, S and/or Se (in total): 0.05% or less, sol. Al: 0.010% to 0.04%, N: 0.005% or less, the balance being Fe and incidental impurities, then subjecting the slab to hot-rolling to obtain a hot-rolled sheet, then optionally subjecting the hot-rolled sheet to hot band annealing and subsequent cold-rolling once, or twice or more with intermediate annealing performed therebetween to obtain a cold-rolled sheet with final sheet thickness, then subjecting the cold-rolled sheet to primary recrystallization annealing and subsequent secondary recrystallization annealing, in which the aging index Al of the steel sheet before final cold-rolling is set to 70 MPa or less to effectively grow Goss-oriented grains to thereby obtain a grain-oriented electrical steel sheet with good magnetic properties, without the restriction of containing a relatively large amount of C.

JP 2003 193135 A (PTL 8) describes a method of producing a grain-oriented silicon steel sheet by using a slab produced by using molten steel having a composition containing, by mass, 0.08% or less C, 2.0 to 8.0% Si, and 0.005 to 3.0% Mn, and in which the content of Al is controlled to less than 100 ppm, and the contents of N, S, and Se are controlled to 50 ppm or less, respectively. As for the steel sheet before final cold rolling, the variation width of mean crystal grain sizes at each position in the thickness direction with respect to the mean crystal grain size of the total sheet thickness is controlled within the range of -50 to 50% over the total sheet thickness.

EP 1 281 778 A2 (PTL 9) describes a method of manufacturing a grain-oriented electrical steel sheet comprising rolling a steel slab containing Si to obtain a steel sheet; performing first batch annealing on said steel sheet; performing continuous annealing on said sheet after said first batch annealing; applying an annealing separator; and then performing second batch annealing on said sheet.

### CITATION LIST

### Patent Literatures

PTL 1: US 1965559 A
PTL 2: JP S40-15644 B2
PTL 3: JP S51-13469 B2
PTL 4: JP 2782086 B2
PTL 5: JP 2000-129356 A
PTL 6: EP 2 902 507 A1
PTL 7: WO 2015/045397 A1
PTL 8: JP 2003 193135 A
PTL 9: EP 1 281 778 A2

### Non-patent Literature

NPL 1: Y. Ushigami et al. "Precipitation Behaviors of Injected Nitride Inhibitors during Secondary Recrystallization Annealing in Grain Oriented Silicon Steel" Materials Science Forum Vols. 204-206 (1996) pp. 593-598

### SUMMARY

### (Technical Problem)

The inhibitorless method does not require high-temperature slab heating, and so can produce the grain-oriented electrical steel sheet at low cost. However, due to the absence of the inhibitor component, normal grain growth (primary recrystallized grain growth) inhibiting capability is insufficient, which causes poor orientation of Goss grains growing during secondary recrystallization. This results in degradation of the magnetic properties of the product as compared with a high-temperature slab heated material.

It could therefore be helpful to provide a method of producing a grain-oriented electrical steel sheet at low cost with high productivity without requiring high-temperature slab heating, which enhances the normal grain growth inhibiting capability and sharpens the orientation of Goss grains growing during secondary recrystallization to thus improve the magnetic properties.

### (Solution to Problem)

We made intensive studies to solve the problems stated above.

As a result, we discovered that the normal grain growth inhibiting capability can be obtained even with slab heating in a low temperature region of 1300 °C or less, by mutually regulating the contents of component elements sol.Al, S, Se, Sn, and Sb in minute amount regions below their conventionally recognized contents for functioning as inhibitors.

We also discovered that the normal grain growth inhibiting capability can be further enhanced and the magnetic properties can be further improved by: applying nitriding treatment in a subsequent step to cause not AlN but silicon nitride (Si₃N₄) to precipitate and function to inhibit normal grain growth; and adding, to an annealing separator applied to the steel sheet before secondary recrystallization annealing, one or more selected from sulfide, sulfate, selenide, and selenite to function to inhibit normal grain growth immediately before secondary recrystallization. Hence, the present disclosure makes it possible to industrially produce a grain-oriented electrical steel sheet having magnetic properties equivalent to those of a high-temperature slab heated material, by a method of producing a grain-oriented electrical steel sheet at low cost with high productivity without requiring high-temperature slab heating.

We thus provide: A method of producing a grain-oriented electrical steel sheet, the method according to the claim 1.

### (Advantageous Effect)

According to the present disclosure, by controlling the amount of N, the amount of sol.Al, the amount of Sn + Sb, and the amount of S + Se, the normal grain growth inhibiting capability is enhanced and the orientation of Goss grains growing during secondary recrystallization is sharpened, with it being possible to significantly improve the magnetic properties of the product which have been a problem with the low-temperature slab heating method. In particular, even for a thin steel sheet with a sheet thickness of 0.23 mm which has been considered difficult to increase in magnetic flux density, excellent magnetic properties, i.e. a magnetic flux density B₈ of 1.92 T or more after secondary recrystallization annealing, can be stably obtained throughout the coil length.

Moreover, in the case of further performing the nitriding treatment or adding the predetermined component(s) to the annealing separator, higher magnetic properties, i.e. a magnetic flux density B₈ of 1.94 T or more, can be obtained.

Furthermore, in the case of performing the nitriding treatment or adding the predetermined component(s) to the annealing separator, excellent iron loss properties equivalent to those of a high-temperature slab heated material, i.e. an iron loss W_{17/50} of 0.70 W/kg or less after magnetic domain refining treatment, can be obtained by the production method of low cost and high productivity according to the present disclosure.

### BRIEF DESCRIPTION OF THE DRAWINGS

In the accompanying drawings:

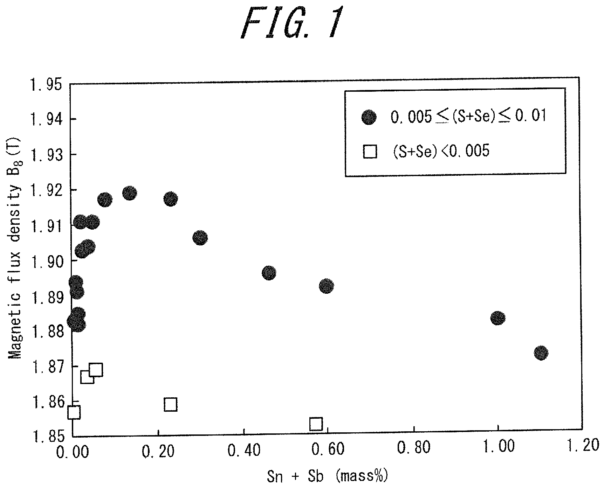

FIG. 1 is a graph illustrating the influence of the amount of Sn + Sb in a raw material on the magnetic flux density B₈ of a product sheet.

### DETAILED DESCRIPTION

### [Chemical composition]

A method of producing a grain-oriented electrical steel sheet according to one of the disclosed embodiments is described below. The reasons for limiting the chemical composition of steel are described first. In the description, "%" representing the content (amount) of each component element denotes "mass%" unless otherwise noted.

### C in an amount of 0.002 % or more and 0.080 % or less

If the amount of C is less than 0.002 %, the grain boundary strengthening effect by C is lost, and defects which hamper production, such as slab cracking, appear. If the amount of C is more than 0.080 %, it is difficult to reduce, by decarburization annealing, the amount to 0.005 % or less that causes no magnetic aging. The amount of C is therefore preferably in a range of 0.002 % or more and 0.080 % or less.

### Si in an amount of 2.00 % or more and 8.00 % or less

Si is a very effective element in increasing the electrical resistance of the steel and reducing eddy current loss which constitutes part of iron loss. When adding Si to the steel sheet, the electrical resistance monotonically increases until the amount of Si reaches 11 %. Once the amount of Si exceeds 8.00 %, however, workability decreases significantly. If the amount of Si is less than 2.00 %, the electrical resistance is low, and good iron loss properties cannot be obtained. The amount of Si is therefore in a range of 2.00 % or more and 8.00 % or less. The amount of Si is more preferably in a range of 2.50 % or more and 4.50 % or less.

### Mn in an amount of 0.02 % or more and 0.50 % or less

Mn bonds with S or Se to form MnS or MnSe. Such MnS or MnSe, even in a minute amount, acts to inhibit normal grain growth in the heating process of secondary recrystallization annealing, in combination use with a grain boundary segregation element. If the amount of Mn is less than 0.02 %, the normal grain growth inhibiting capability is insufficient. If the amount of Mn is more than 0.50 %, not only high-temperature slab heating is necessary in the slab heating process before hot rolling in order to completely dissolve Mn, but also MnS or MnSe forms as a coarse precipitate, and thus the normal grain growth inhibiting capability decreases. The amount of Mn is therefore in a range of 0.02 % or more and 0.50 % or less.

### S and/or Se in an amount of 0.005 % or more and 0.010 % or less in total

S and Se are one of the features of the present disclosure. As mentioned above, S and Se bond with Mn to exert the normal grain growth inhibiting action. If the total amount of S and/or Se is less than 0.005 %, the normal grain growth inhibiting capability is insufficient. The total amount of S and/or Se is therefore preferably 0.005 % or more. If the total amount of S and/or Se is more than 0.010 %, MnS or MnSe cannot dissolve completely in the low-temperature slab heating process at 1300 °C or less which is one of the features of the present disclosure, causing insufficient normal grain growth inhibiting capability. The total amount of S and/or Se is therefore in a range of 0.005 % or more and 0.010 % or less.

### sol.Al in an amount of 0.003 % or more and less than 0.010 %

Al forms a dense oxide film on the surface, and can make the control of nitriding content difficult during nitriding or hamper decarburization. Accordingly, the amount of Al is limited to less than 0.010 % in sol.Al amount. Al having high oxygen affinity is, when added in a minute amount in steelmaking, expected to reduce the amount of dissolved oxygen in the steel and, for example, reduce oxide inclusions which cause degradation in properties. In view of this, the amount of sol.Al is 0.003 % or more, with it being possible to suppress degradation in magnetic properties.

### N in an amount of less than 0.006 %

If the amount of N is excessively high, secondary recrystallization becomes difficult, as with S and Se. In particular, if the amount of N is 0.006 % or more, secondary recrystallization is unlikely to occur, and the magnetic properties degrade. The amount of N is therefore limited to less than 0.006 %.

### At least one of Sn and Sb: Sn and/or Sb in an amount of 0.005 % or more and 1.000 % or less in total

Sn and Sb are one of the features of the present disclosure. Sn and Sb are grain boundary segregation elements. Adding these elements increases the normal grain growth inhibiting capability and enhances the secondary recrystallization driving force, thus stabilizing secondary recrystallization. If the total amount of Sn and/or Sb is less than 0.005 %, the effect of the normal grain growth inhibiting capability is insufficient. If the total amount of Sn and/or Sb is more than 1.000 %, excessive normal grain growth inhibiting capability causes unstable secondary recrystallization, leading to degradation in magnetic properties. Besides, productivity drops due to grain boundary embrittlement or rolling load increase. The total amount of Sn and/or Sb is therefore in a range of 0.005 % or more and 1.000 % or less. The total amount of Sn and/or Sb is more preferably in a range of 0.020 % or more and 0.300 % or less, in terms of magnetic property scattering reduction and productivity.

### An experiment that led to limiting the amount of Sn and Sb to the above-mentioned range is described below.

Table 1 illustrates the magnetic flux density B₈ of a product sheet that varies depending on the amount of Sn + Sb. A slab with a thickness of 220 mm of each steel listed in Table 1 with the balance being Fe and inevitable impurities was heated to 1200 °C, and then hot rolled to a thickness of 2.5 mm. After this, the hot rolled sheet was hot band annealed at 1000 °C for 60 s, and then cold rolled to a thickness of 0.27 mm. The cold rolled sheet was then subjected to primary recrystallization annealing at 820 °C for 100 s. The heating rate from 500 °C to 700 °C in the primary recrystallization annealing was 200 °C/s. Subsequently, an annealing separator mainly composed of MgO was applied to the steel sheet surface, and then the steel sheet was subjected to secondary recrystallization annealing serving also as purification annealing at 1200 °C for 10 h. Following this, a phosphate-based insulating tension coating was applied and baked on the steel sheet, and flattening annealing was performed for the purpose of flattening the steel strip to obtain a product. Test pieces were thus obtained under the respective conditions.

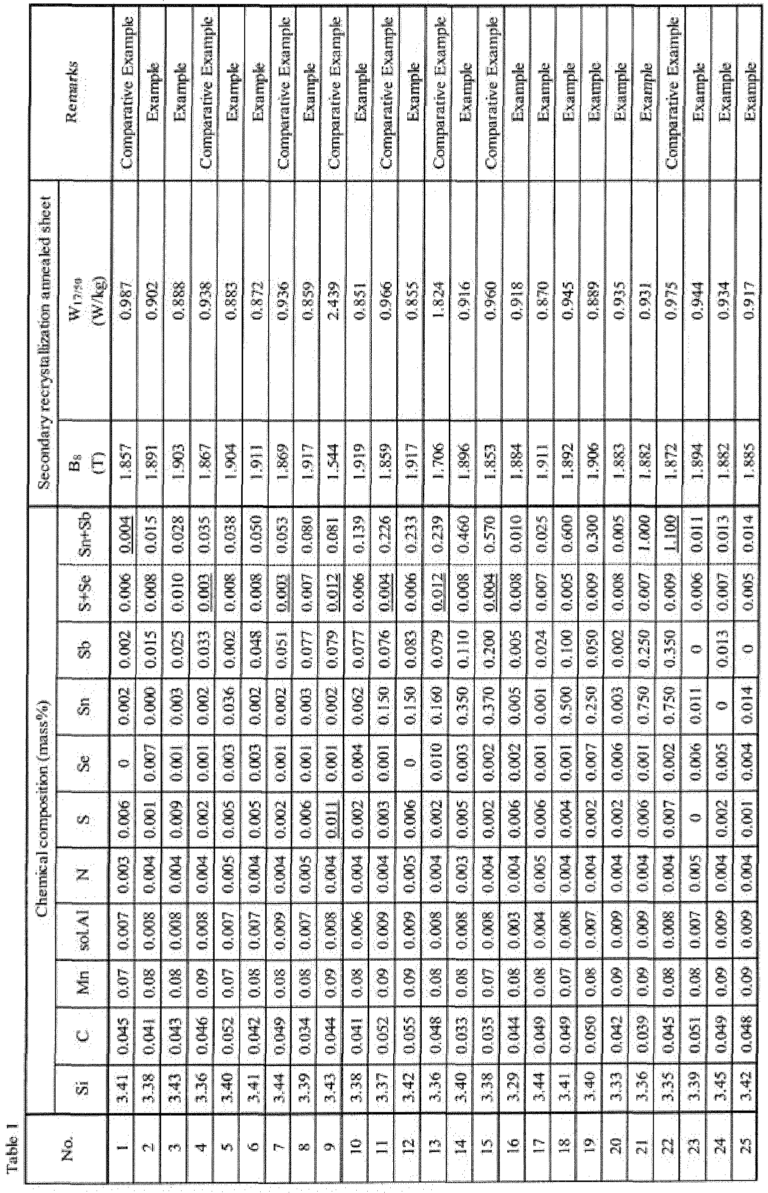

FIG. 1 illustrates the results of examining the influence of the amount of Sn + Sb (the total amount of Sn and Sb) in the raw material on the magnetic flux density B₈ of the product sheet. As illustrated in FIG. 1, by appropriately limiting the amount of Sn + Sb in the raw material while setting S and/or Se to 0.005 % or more and 0.010 % or less in total, the magnetic flux density was improved. In particular, by limiting the total amount of Sn and/or Sb to 0.005 % or more and 1.000 % or less, a magnetic flux density B₈ of 1.88 T or more was obtained. Moreover, by limiting the total amount of Sn and/or Sb to 0.020 % or more and 0.300 % or less, a magnetic flux density B₈ of 1.900 T or more was obtained.

The reasons why the magnetic flux density of the product sheet was improved by appropriately limiting the amount of Sn + Sb in the raw material while setting S and/or Se to 0.005 % or more and 0.010 % or less in total are not exactly clear, but we consider the reasons as follows. S and Se, by combined use of the grain boundary segregation effect by solute S and Se content and the precipitates such as MnS and MnSe or Cu₂S and Cu₂Se, can enhance the normal grain growth inhibiting effect and sharpen the orientation of Goss grains growing during secondary recrystallization, so that the magnetic properties of the product which have been a problem with the low-temperature slab heating method can be improved significantly. Moreover, Sn and Sb are known as grain boundary segregation elements, and contribute to the normal grain growth inhibiting capability. Furthermore, in the case where a large amount of S and/or Se is contained as in the present disclosure, the solute amount of S and/or Se increases in addition to the precipitate amount of sulfide and selenide. An increase in the solute amount of S and/or Se leads to an increase in the grain boundary segregation amount of S and/or Se. This creates a state (i.e. co-segregation) in which the grain boundary segregation of Sn and Sb is facilitated, as a result of which the effect of grain boundary segregation increases.

The basic components according to the present disclosure have been described above. The balance other than the above-mentioned components is Fe and inevitable impurities. In the present disclosure, the following elements may also be optionally added as appropriate.

### Ni in an amount of 0.005 % or more and 1.5 % or less

Ni is an austenite forming element, and accordingly is a useful element in improving the texture of the hot rolled sheet and improving the magnetic properties through austenite transformation. If the amount of Ni is less than 0.005 %, the effect of improving the magnetic properties is low. If the amount of Ni is more than 1.5 %, workability decreases, and so sheet passing performance decreases. Besides, secondary recrystallization becomes unstable, which causes degradation in magnetic properties. The amount of Ni is therefore in a range of 0.005 % to 1.5 %.

Cu in an amount of 0.005 % or more and 1.5 % or less, Cr in an amount of 0.005 % or more and 0.1 % or less, P in an amount of 0.005 % or more and 0.5 % or less, Mo in an amount of 0.005 % or more and 0.5 % or less, Ti in an amount of 0.0005 % or more and 0.1 % or less, Nb in an amount of 0.0005 % or more and 0.1 % or less, V in an amount of 0.0005 % or more and 0.1 % or less, B in an amount of 0.0002 % or more and 0.0025 % or less, Bi in an amount of 0.005 % or more and 0.1 % or less, Te in an amount of 0.0005 % or more and 0.01 % or less, Ta in an amount of 0.0005 % or more and 0.01 % or less
Cu, Cr, P, Mo, Ti, Nb, V, B, Bi, Te, and Ta are each a useful element in magnetic property improvement. If the content is less than the lower limit of the corresponding range mentioned above, the magnetic property improving effect is low. If the content is more than the upper limit of the corresponding range mentioned above, secondary recrystallization becomes unstable, which causes degradation in magnetic properties. Accordingly, in the case of adding any of these elements, the amount of Cu is in a range of 0.005 % or more and 1.5 % or less, the amount of Cr is in a range of 0.005 % or more and 0.1 % or less, the amount of P is in a range of 0.005 % or more and 0.5 % or less, the amount of Mo is in a range of 0.005 % or more and 0.5 % or less, the amount of Ti is in a range of 0.0005 % or more and 0.1 % or less, the amount of Nb is in a range of 0.0005 % or more and 0.1 % or less, the amount of V is in a range of 0.0005 % or more and 0.1 % or less, the amount of B is in a range of 0.0002 % or more and 0.0025 % or less, the amount of Bi is in a range of 0.005 % or more and 0.1 % or less, the amount of Te is in a range of 0.0005 % or more and 0.01 % or less, and the amount of Ta is in a range of 0.0005 % or more and 0.01 % or less.

The present disclosure provides a method that combines a minute amount of precipitate and a grain boundary segregation element, which can be referred to as subtle inhibition control (SIC) method. The SIC method is more advantageous than the conventional inhibitor technique or inhibitorless technique, as it can simultaneously achieve the low-temperature slab heating and the normal grain growth inhibiting effect.

It is considered that, in the case of being redissolved in the slab heating, S and Se precipitate as fine MnS and MnSe during hot rolling, and contribute to enhanced normal grain growth inhibiting capability. If the total amount of S and/or Se is less than 0.005 %, this effect is insufficient, so that the magnetic property improving effect cannot be achieved. If the total amount of S and/or Se is more than 0.010 %, the redissolution in the low-temperature slab heating at 1300 °C or less is insufficient, and the normal grain growth inhibiting capability decreases rapidly. This causes a secondary recrystallization failure.

A production method according to the present disclosure is described below.

### [Heating]

A steel slab having the above-mentioned chemical composition is subjected to slab heating. The slab heating temperature is 1300 °C or less. Heating at more than 1300 °C requires the use of not ordinary gas heating but a special heating furnace such as induction heating, and so is disadvantageous in terms of cost, productivity, yield rate, and the like.

### [Hot rolling]

After this, hot rolling is performed. The hot rolling conditions are a rolling reduction of 95 % or more and a sheet thickness after hot rolling of 1.5 mm to 3.5 mm. The rolling finish temperature is desirably 800 °C or more. The coiling temperature after the hot rolling is desirably about 500 °C to 700 °C.

### [Hot band annealing]

After the hot rolling, hot band annealing is performed to improve the texture of the hot rolled sheet. The hot band annealing is performed under the conditions of a soaking temperature of 800 °C or more and 1200 °C or less and a soaking time of 2 s or more and 300 s or less.

If the soaking temperature in the hot band annealing is less than 800 °C, the texture of the hot rolled sheet is not completely improved, and non-recrystallized parts remain, so that desired texture may be unable to be obtained. If the soaking temperature is more than 1200 °C, the dissolution of AlN, MnSe, and MnS proceeds, and the inhibiting capability of the inhibitors in the secondary recrystallization process is insufficient, as a result of which secondary recrystallization is suspended. This causes degradation in magnetic properties. Accordingly, the soaking temperature in the hot band annealing is 800 °C or more and 1200 °C or less.

If the soaking time is less than 2 s, non-recrystallized parts remain because of the short high-temperature holding time, so that desired texture may be unable to be obtained. If the soaking time is more than 300 s, the dissolution of AlN, MnSe, and MnS proceeds, and the above-mentioned effect of N, sol.Al, Sn + Sb, and S + Se added in minute amounts decreases, as a result of which the texture of the cold rolled sheet becomes non-uniform. This causes degradation in the magnetic properties of the secondary recrystallization annealed sheet. Accordingly, the soaking time in the hot band annealing is 2 s or more and 300 s or less.

### [Cold rolling]

After the hot rolling or the hot band annealing, the steel sheet is subjected to cold rolling twice or more with intermediate annealing performed therebetween, to a final sheet thickness. In this case, the intermediate annealing is performed with a soaking temperature of 800 °C or more and 1200 °C or less and a soaking time of 2 s or more and 300 s or less, for the same reasons as in the hot band annealing.

In the cold rolling, by setting the rolling reduction in final cold rolling to 80 % or more and 95 % or less, better texture of the primary recrystallization annealed sheet can be obtained. It is also effective to perform the rolling with the rolling temperature increased to 100 °C to 250 °C, or perform aging treatment once or more in a range of 100 °C to 250 °C during the cold rolling, in terms of developing Goss texture.

### [Primary recrystallization annealing]

After the cold rolling, the cold rolled sheet is subjected to primary recrystallization annealing at a soaking temperature of 700 °C or more and 1000 °C or less. The primary recrystallization annealing may be performed in, for example, a wet hydrogen atmosphere to additionally obtain the effect of decarburization of the steel sheet. If the soaking temperature in the primary recrystallization annealing is less than 700 °C, non-recrystallized parts remain, and desired texture may be unable to be obtained. If the soaking temperature is more than 1000 °C, there is a possibility that the secondary recrystallization of Goss orientation grains occurs. Accordingly, the soaking temperature in the primary recrystallization annealing is 700 °C or more and 1000 °C or less. In the primary recrystallization annealing, the average heating rate in a temperature range of 500 °C to 700 °C is 100 °C/s or more.

### [Nitriding treatment]

Further, in the present disclosure, nitriding treatment may be applied in any stage between the primary recrystallization annealing and the secondary recrystallization annealing. As the nitriding treatment, any of the known techniques such as performing gas nitriding by heat treatment in an ammonia atmosphere after the primary recrystallization annealing, performing salt bath nitriding by heat treatment in a salt bath, performing plasma nitriding, adding nitride to the annealing separator, and using a nitriding atmosphere as the secondary recrystallization annealing atmosphere, may be used.

### [Secondary recrystallization annealing]

Subsequently, an annealing separator mainly composed of MgO is optionally applied to the steel sheet surface, and then the steel sheet is subjected to secondary recrystallization annealing. Here, one or more selected from sulfide, sulfate, selenide, and selenate may be added to the annealing separator. These additives dissolve during the secondary recrystallization annealing, and then causes sulfurizing and selenizing in the steel, to thereby provide an inhibiting effect. The annealing conditions of the secondary recrystallization annealing are not limited, and conventionally known annealing conditions may be used. By using a hydrogen atmosphere as the annealing atmosphere, the effect of purification annealing can also be achieved. Subsequently, after application of insulating coating and execution of flattening annealing, a desired grain-oriented electrical steel sheet is obtained. The production conditions in the application of insulating coating and the flattening annealing are not limited, and conventional methods may be used.

The grain-oriented electrical steel sheet produced according to the above-mentioned conditions has a very high magnetic flux density as well as low iron loss properties after the secondary recrystallization. A high magnetic flux density means that the crystal grains have preferentially grown only in the Goss orientation and its vicinity during the secondary recrystallization process. In the Goss orientation and its vicinity, the growth rate of secondary recrystallized grains is higher. Therefore, an increase in magnetic flux density indicates that the secondary recrystallized grain size is potentially coarse. This is advantageous in terms of reducing hysteresis loss, but disadvantageous in terms of reducing eddy current loss.

### [Magnetic domain refining treatment]

To solve such mutually contradictory phenomena against the ultimate goal of iron loss reduction, it is preferable to perform magnetic domain refining treatment. By performing appropriate magnetic domain refining treatment, the disadvantageous eddy current loss caused by the coarsening of secondary recrystallized grains is reduced, and together with the hysteresis loss reduction, significantly low iron loss properties can be obtained.

As the magnetic domain refining treatment, any known heat resistant or non-heat resistant magnetic domain refining treatment may be used. With the use of a method of irradiating the steel sheet surface after the secondary recrystallization annealing with an electron beam or a laser, the magnetic domain refining effect can spread to the inside of the steel sheet in the sheet thickness direction, and thus iron loss can be significantly reduced as compared with other magnetic domain refining treatment such as an etching method.

The other production conditions may comply with typical grain-oriented electrical steel sheet production methods.

### EXAMPLES

### (Example 1)

Steel slabs with a thickness of 220 mm having the respective chemical compositions listed in Table 2 were each heated to 1250 °C, and then hot rolled to a thickness of 2.7 mm. After this, the hot rolled sheet was hot band annealed at 1020 °C for 60 s, and then cold rolled to a thickness of 0.27 mm. The cold rolled sheet was then subjected to primary recrystallization annealing at 840 °C for 120 s. The heating rate from 500 °C to 700 °C in the primary recrystallization annealing was 100 °C/s.

Subsequently, an annealing separator mainly composed of MgO was applied to the steel sheet surface, and then the steel sheet was subjected to secondary recrystallization annealing serving also as purification annealing at 1200 °C for 10 h. Following this, a phosphate-based insulating tension coating was applied and baked on the steel sheet, and flattening annealing was performed for the purpose of flattening the steel strip, to obtain a product.

The results of examining the magnetic properties of each product obtained in this way are listed in Table 2.

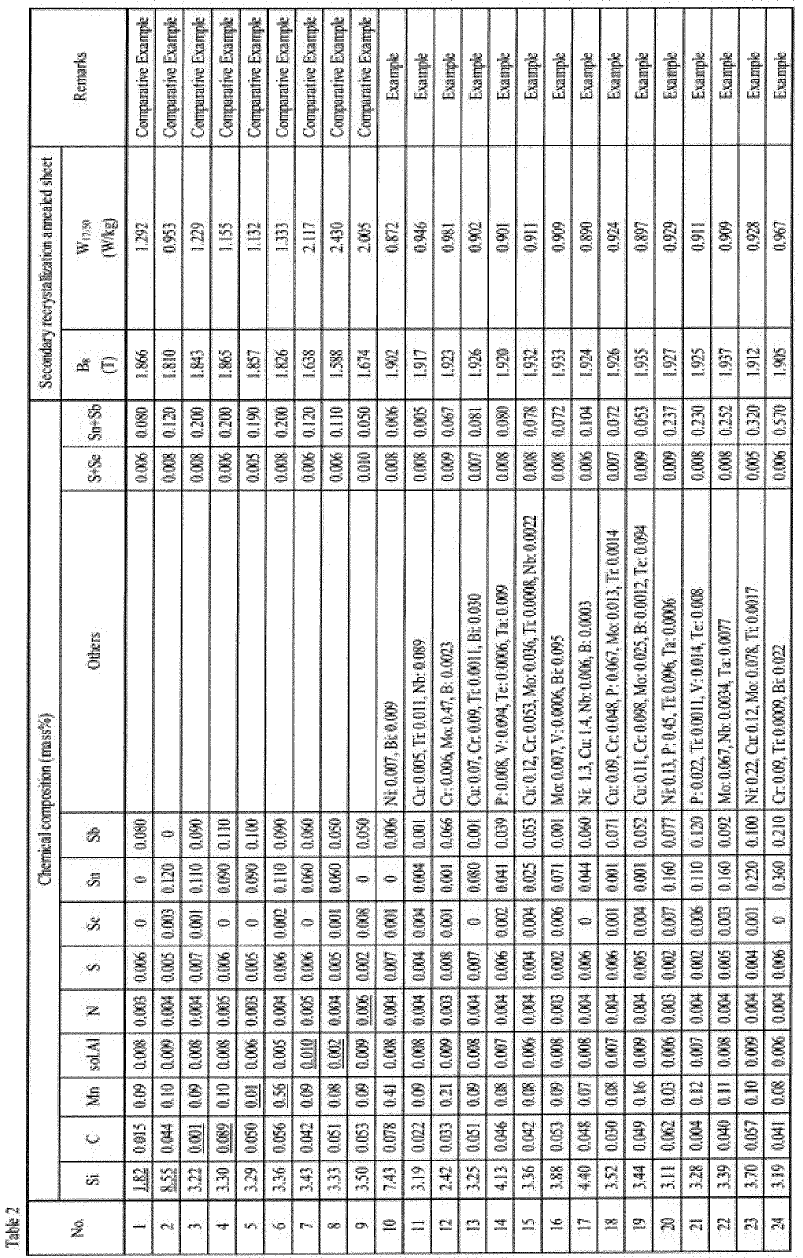

As shown in Table 2, by appropriately limiting the amount of Sn + Sb in the raw material while setting S and/or Se to 0.005 % or more and 0.010 % or less in total, the magnetic flux density was improved. In particular, by limiting the total amount of Sn and/or Sb to 0.005 % or more and 1.000 % or less, a magnetic flux density B₈ of 1.900 T or more was obtained. Moreover, by limiting the total amount of Sn and/or Sb to 0.020 % or more and 0.300 % or less, a magnetic flux density B₈ of 1.920 T or more was obtained.

### (Example 2)

The steel slabs of Nos. 13 and 18 in Table 2 were each heated to 1230 °C, and then hot rolled to a thickness of 2.7 mm. The hot rolled sheet was then hot band annealed at 1000 °C for 60 s, and subsequently subjected to the first cold rolling to an intermediate thickness of 2.0 mm. After intermediate annealing at 1040 °C for 60 s, the steel sheet was subjected to the second cold rolling to a thickness of 0.23 mm. The cold rolled sheet was then subjected to primary recrystallization annealing at 820 °C for 120 s. The heating rate from 500 °C to 700 °C in the primary recrystallization annealing was 150 °C/s. Following this, the nitriding treatment and the addition of sulfate to the annealing separator were examined under the conditions listed in Table 3. As the nitriding treatment, gas nitriding treatment was performed on the primary recrystallization annealed sheet at 750 °C for 30 s and at 950 °C for 30 s in a gas atmosphere containing ammonia. The amount of nitrogen in the steel sheet after subjection to the nitriding treatment is listed in Table 3. As the addition of sulfate to the annealing separator, an annealing separator containing MgO and MgSO₄ in an amount of 10 parts by mass with respect to MgO in an amount of 100 parts by mass was applied to the steel sheet surface. After this, the steel sheet was subjected to secondary recrystallization annealing also serving as purification annealing at 1180 °C for 50 h. Subsequently, a phosphate-based insulation tension coating was applied and baked on the steel sheet, and flattening annealing was performed for the purpose of flattening the steel strip, to obtain a product sheet.

The results of examining the magnetic properties of each product sheet obtained in this way are listed in Table 3.

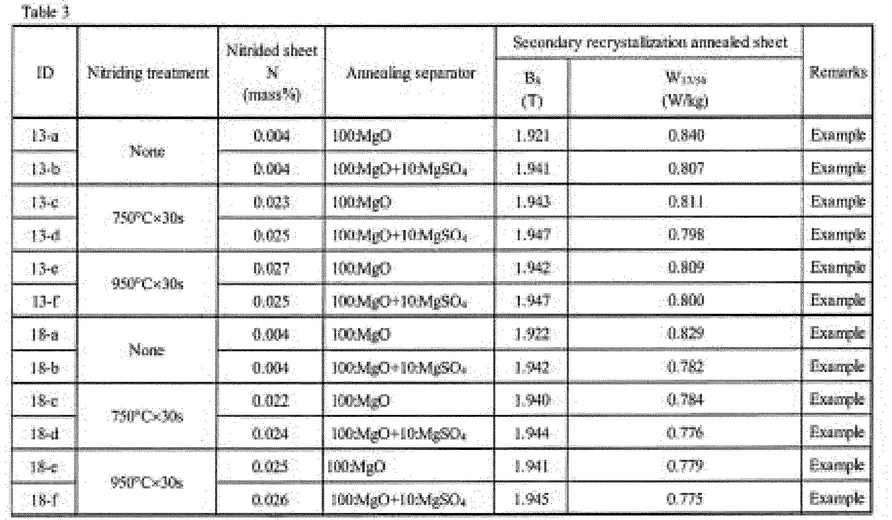

As shown in Table 3, by limiting the total amount of S and/or Se to 0.005 % or more and 0.010 % or less and the total amount of Sn and/or Sb to 0.020 % or more and 0.300 % or less, a magnetic flux density B₈ of 1.920 T or more was obtained. In addition, by performing the nitriding treatment on the primary recrystallization annealed sheet or adding sulfate to the annealing separator, a magnetic flux density B₈ of 1.940 T or more was obtained.

### (Example 3)

For the samples of Nos. 13-b, 13-c, 18-b, and 18-c in Table 3, an experiment for determining the effect of magnetic domain refining treatment listed in Table 4 was conducted. Etching was performed to form grooves of 80 µm in width, 15 µm in depth, and 5 mm in rolling direction interval in the direction orthogonal to the rolling direction on one surface of the cold rolled steel sheet. An electron beam was continuously applied to one surface of the steel sheet after subjection to the flattening annealing in the direction orthogonal to the rolling direction, under the conditions of an acceleration voltage of 80 kV, an irradiation interval of 5 mm, and a beam current of 3 mA. A continuous laser was continuously applied to one surface of the steel sheet after subjection to the flattening annealing in the direction orthogonal to the rolling direction, under the conditions of a beam diameter of 0.3 mm, a power of 200 W, a scanning rate of 100 m/s, and an irradiation interval of 5 mm.

The results of examining the magnetic properties of each product obtained in this way are listed in Table 4.

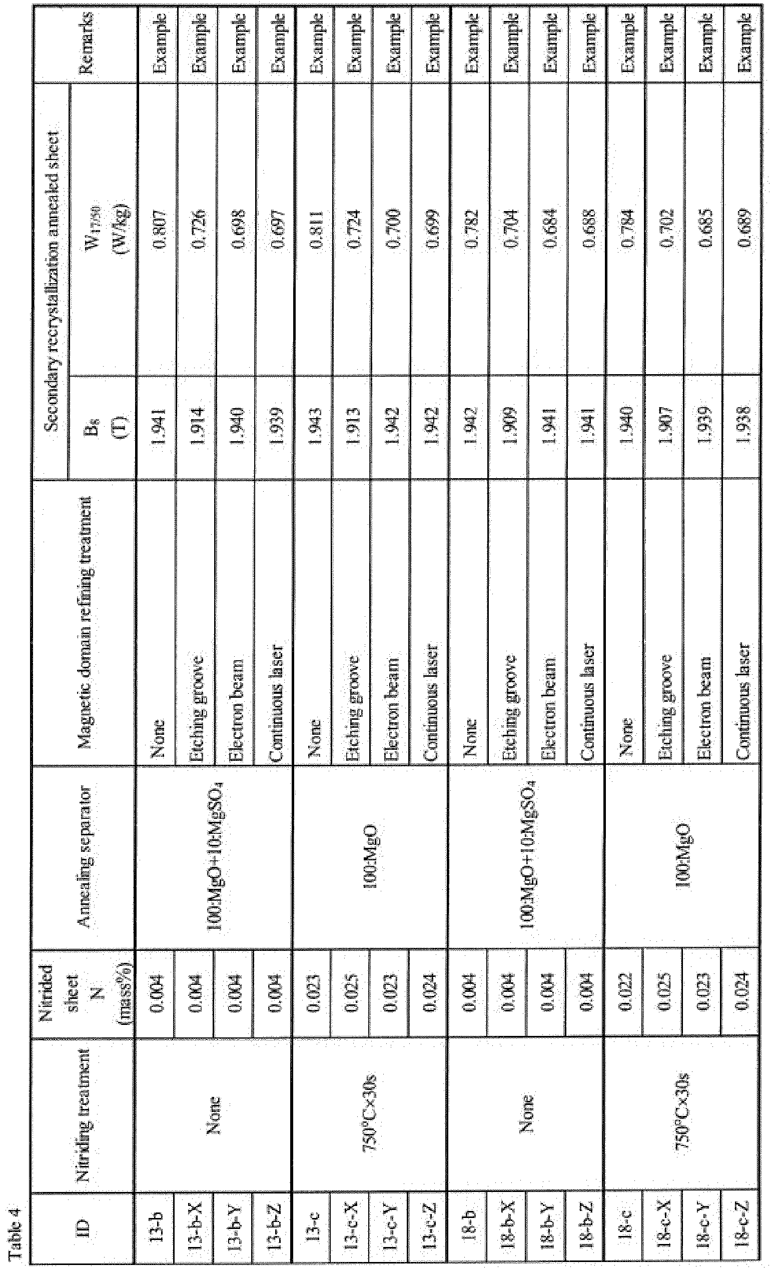

As shown in Table 4, by performing the magnetic domain refining treatment, better iron loss properties were obtained. In detail, excellent iron loss properties equivalent to those of a high-temperature slab heated material, i.e. an iron loss W_{17/50} of 0.70 W/kg or less after the magnetic domain refining treatment by an electron beam or a continuous laser, can be obtained by the production method of low cost and high productivity according to the present disclosure.

### INDUSTRIAL APPLICABILITY

According to the present disclosure, by controlling minute amount inhibitors, the normal grain growth inhibiting capability is enhanced and the orientation of Goss grains growing during secondary recrystallization is sharpened, with it being possible to significantly improve the magnetic properties of the product which have been a problem with the low-temperature slab heating method. In particular, even for a thin steel sheet with a sheet thickness of 0.23 mm which has been considered difficult to increase in magnetic flux density, excellent magnetic properties, i.e. a magnetic flux density B₈ of 1.92 T or more after secondary recrystallization annealing, can be stably obtained throughout the coil length.

## Claims

1. A method of producing a grain-oriented electrical steel sheet, the method comprising:
heating a steel slab at 1300 °C or less, the steel slab having a chemical composition containing, in mass%,
C in an amount of 0.002 % or more and 0.080 % or less,
Si in an amount of 2.00 % or more and 8.00 % or less,
Mn in an amount of 0.02 % or more and 0.50 % or less,
acid-soluble Al in an amount of 0.003 % or more and less than 0.010 %,
S and/or Se in an amount of 0.005 % or more and 0.010 % or less in total,
Sn and/or Sb in an amount of 0.005 % or more and 1.000 % or less in total,
N in an amount of less than 0.006 %,
optionally one or more selected from
Ni in an amount of 0.005 % or more and 1.5 % or less,
Cu in an amount of 0.005 % or more and 1.5 % or less,
Cr in an amount of 0.005 % or more and 0.1 % or less,
P in an amount of 0.005 % or more and 0.5 % or less,
Mo in an amount of 0.005 % or more and 0.5 % or less,
Ti in an amount of 0.0005 % or more and 0.1 % or less,
Nb in an amount of 0.0005 % or more and 0.1 % or less,
V in an amount of 0.0005 % or more and 0.1 % or less,
B in an amount of 0.0002 % or more and 0.0025 % or less,
Bi in an amount of 0.005 % or more and 0.1 % or less,
Te in an amount of 0.0005 % or more and 0.01 % or less, and
Ta in an amount of 0.0005 % or more and 0.01 % or less; and
a balance being Fe and inevitable impurities;
subjecting the steel slab to hot rolling at a rolling reduction of 95 % or more to obtain a hot rolled steel sheet having a sheet thickness of 1.5 mm to 3.5 mm;
thereafter performing hot band annealing under the conditions of a soaking temperature of 800 °C or more and 1200 °C or less and a soaking time of 2 s or more and 300 s or less;
subjecting the hot rolled and hot band annealed steel sheet to cold rolling once, or twice or more with intermediate annealing performed therebetween with a soaking temperature of 800 °C or more and 1200 °C or less and a soaking time of 2 s or more and 300 s or less, to obtain a cold rolled steel sheet with a final sheet thickness;
subjecting the cold rolled steel sheet to primary recrystallization annealing at a soaking temperature of 700 °C or more and 1000 °C or less, the average heating rate in a temperature range of 500 °C to 700 °C in the primary recrystallization annealing being 100 °C/s or more;
applying an annealing separator to a surface of the cold rolled steel sheet after subjection to the primary recrystallization annealing; and
then subjecting the cold rolled steel sheet to secondary recrystallization annealing.

2. The method of producing a grain-oriented electrical steel sheet according to claim 1,
wherein in the chemical composition, the total amount of Sn and/or Sb is in a range of 0.020 % or more and 0.300 % or less in mass%.

3. The method of producing a grain-oriented electrical steel sheet according to claim 1 or 2,
wherein the chemical composition contains, in mass%, one or more selected from
Ni in an amount of 0.005 % or more and 1.5 % or less,
Cu in an amount of 0.005 % or more and 1.5 % or less,
Cr in an amount of 0.005 % or more and 0.1 % or less,
P in an amount of 0.005 % or more and 0.5 % or less,
Mo in an amount of 0.005 % or more and 0.5 % or less,
Ti in an amount of 0.0005 % or more and 0.1 % or less,
Nb in an amount of 0.0005 % or more and 0.1 % or less,
V in an amount of 0.0005 % or more and 0.1 % or less,
B in an amount of 0.0002 % or more and 0.0025 % or less,
Bi in an amount of 0.005 % or more and 0.1 % or less,
Te in an amount of 0.0005 % or more and 0.01 % or less, and
Ta in an amount of 0.0005 % or more and 0.01 % or less.

4. The method of producing a grain-oriented electrical steel sheet according to any one of claims 1 to 3, further comprising
after the cold rolling, subjecting the cold rolled steel sheet to nitriding treatment.

5. The method of producing a grain-oriented electrical steel sheet according to any one of claims 1 to 4,
wherein one or more selected from sulfide, sulfate, selenide, and selenate are added to the annealing separator.

6. The method of producing a grain-oriented electrical steel sheet according to any one of claims 1 to 5, further comprising
after the cold rolling, subjecting the cold rolled steel sheet to magnetic domain refining treatment.

7. The method of producing a grain-oriented electrical steel sheet according to claim 6,
wherein in the magnetic domain refining treatment, the cold rolled steel sheet after subjection to the secondary recrystallization annealing is irradiated with an electron beam.

8. The method of producing a grain-oriented electrical steel sheet according to claim 6,
wherein in the magnetic domain refining treatment, the cold rolled steel sheet after subjection to the secondary recrystallization annealing is irradiated with a laser.

## Patentansprüche

1. Verfahren zur Herstellung eines kornorientierten Elektrostahlblechs, wobei das Verfahren umfasst:
Erwärmen einer Stahlbramme bei 1.300°C oder weniger, wobei die Stahlbramme eine chemische Zusammensetzung aufweist, enthaltend, in Masse-%,
C in einer Menge von 0,002 % oder mehr und 0,080 % oder weniger,
Si in einer Menge von 2,00 % oder mehr und 8,00 % oder weniger,
Mn in einer Menge von 0,02 % oder mehr und 0,50 % oder weniger,
säurelösliches Al in einer Menge von 0,003 % oder mehr und weniger als 0,010 %,
S und/oder Se in einer Menge von insgesamt 0,005 % oder mehr und 0,010 % oder weniger,
Sn und/oder Sb in einer Menge von insgesamt 0,005 % oder mehr und 1,000 % oder weniger,
N in einer Menge von weniger als 0,006 %,
optional eines oder mehrere, ausgewählt aus
Ni in einer Menge von 0,005 % oder mehr und 1,5 % oder weniger,
Cu in einer Menge von 0,005 % oder mehr und 1,5 % oder weniger,
Cr in einer Menge von 0,005 % oder mehr und 0,1 % oder weniger,
P in einer Menge von 0,005 % oder mehr und 0,5 % oder weniger,
Mo in einer Menge von 0,005 % oder mehr und 0,5 % oder weniger,
Ti in einer Menge von 0,0005 % oder mehr und 0,1 % oder weniger,
Nb in einer Menge von 0,0005 % oder mehr und 0,1 % oder weniger,
V in einer Menge von 0,0005 % oder mehr und 0,1 % oder weniger,
B in einer Menge von 0,0002 % oder mehr und 0,0025 % oder weniger,
Bi in einer Menge von 0,005 % oder mehr und 0,1 % oder weniger,
Te in einer Menge von 0,0005 % oder mehr und 0,01 % oder weniger und
Ta in einer Menge von 0,0005 % oder mehr und 0,01 % oder weniger und
einen Rest, der Fe und unvermeidliche Verunreinigungen ist,
Unterziehen der Stahlbramme einem Warmwalzen bei einer Walzreduktion von 95 % oder mehr, um ein warmgewalztes Stahlblech mit einer Schichtdicke von 1,5 mm bis 3,5 mm zu erhalten,
danach Durchführen eines Warmbandglühens unter den Bedingungen einer Durchwärmungstemperatur von 800°C oder mehr und 1.200°C oder weniger und einer Durchwärmungszeit von 2 s oder mehr und 300 s oder weniger,
Unterziehen des warmgewalzten und warmbandgeglühten Strahlblechs einem Kaltwalzen einmal oder zweimal oder mehrmals mit dazwischen durchgeführtem Zwischenglühen mit einer Durchwärmungstemperatur von 800°C oder mehr und 1.200°C oder weniger und einer Durchwärmungszeit von 2 s oder mehr und 300 s oder weniger, um ein kaltgewalztes Stahlblech mit einer Endblechdicke zu erhalten,
Unterziehen des kaltgewalzten Stahlblechs einem primären Rekristallisationsglühen bei einer Durchwärmungstemperatur von 700°C oder mehr und 1.000°C oder weniger, wobei die durchschnittliche Erwärmungsgeschwindigkeit in einem Temperaturbereich von 500°C bis 700°C bei dem primären Rekristallisationsglühen 100°C/s oder mehr beträgt,
Auftragen eines Glühseparators auf eine Oberfläche des kaltgewalzten Stahlblechs, nachdem es dem primären Rekristallisationsglühen unterzogen wurde, und
anschließend Unterziehen des kaltgewalzten Stahlblechs einem sekundären Rekristallisationsglühen.

2. Verfahren zur Herstellung eines kornorientierten Elektrostahlblechs gemäß Anspruch 1,
wobei in der chemischen Zusammensetzung die Gesamtmenge von Sn und/oder Sb in Masse-% in einem Bereich von 0,020 % oder mehr und 0,300 % oder weniger liegt.

3. Verfahren zur Herstellung eines kornorientierten Elektrostahlblechs gemäß Anspruch 1 oder 2,
wobei die chemische Zusammensetzung, in Masse-%, eines oder mehrere, ausgewählt aus
Ni in einer Menge von 0,005 % oder mehr und 1,5 % oder weniger,
Cu in einer Menge von 0,005 % oder mehr und 1,5 % oder weniger,
Cr in einer Menge von 0,005 % oder mehr und 0,1 % oder weniger,
P in einer Menge von 0,005 % oder mehr und 0,5 % oder weniger,
Mo in einer Menge von 0,005 % oder mehr und 0,5 % oder weniger,
Ti in einer Menge von 0,0005 % oder mehr und 0,1 % oder weniger,
Nb in einer Menge von 0,0005 % oder mehr und 0,1 % oder weniger,
V in einer Menge von 0,0005 % oder mehr und 0,1 % oder weniger,
B in einer Menge von 0,0002 % oder mehr und 0,0025 % oder weniger,
Bi in einer Menge von 0,005 % oder mehr und 0,1 % oder weniger,
Te in einer Menge von 0,0005 % oder mehr und 0,01 % oder weniger und
Ta in einer Menge von 0,0005 % oder mehr und 0,01 % oder weniger enthält.

4. Verfahren zur Herstellung eines kornorientierten Elektrostahlblechs gemäß einem der Ansprüche 1 bis 3, ferner umfassend
nach dem Kaltwalzen das Unterziehen des kaltgewalzten Stahlblechs einer Nitrierbehandlung.

5. Verfahren zur Herstellung eines kornorientierten Elektrostahlblechs gemäß einem der Ansprüche 1 bis 4,
wobei eines oder mehrere, ausgewählt aus Sulfid, Sulfat, Selenid und Selenat, dem Glühseparator hinzugefügt wird.

6. Verfahren zur Herstellung eines kornorientierten Elektrostahlblechs gemäß einem der Ansprüche 1 bis 5, ferner umfassend
nach dem Kaltwalzen das Unterziehen des kaltgewalzten Stahlblechs einer Behandlung zur Verfeinerung der magnetischen Domänen.

7. Verfahren zur Herstellung eines kornorientierten Elektrostahlblechs gemäß Anspruch 6,
wobei in der Behandlung zur Verfeinerung der magnetischen Domänen das kaltgewalzte Stahlblech, nachdem es dem sekundären Rekristallisationsglühen unterzogen wurde, mit einem Elektronenstrahl bestrahlt wird.

8. Verfahren zur Herstellung eines kornorientierten Elektrostahlblechs gemäß Anspruch 6,
wobei in der Behandlung zur Verfeinerung der magnetischen Domänen das kaltgewalzte Stahlblech, nachdem es dem sekundären Rekristallisationsglühen unterzogen wurde, mit einem Laser bestrahlt wird.

## Revendications

1. Procédé de production d'une tôle d'acier électrique à grains orientés, le procédé comprenant :
un chauffage d'une brame d'acier à 1300 °C ou moins, la brame d'acier présentant une composition chimique contenant, en % en masse,
C en une quantité de 0,002 % ou plus et de 0,080 % ou moins,
Si en une quantité de 2,00 % ou plus et de 8,00 % ou moins,
Mn en une quantité de 0,02 % ou plus et de 0,50 % ou moins,
Al soluble en milieu acide en une quantité de 0,003 % ou plus et inférieure à 0,010 %,
S et/ou Se en une quantité de 0,005 % ou plus et 0,010 % ou moins au total,
Sn et/ou Sb en une quantité de 0,005 % ou plus et 1,000 % ou moins au total,
N en une quantité inférieure à 0,006 %,
facultativement un ou plusieurs sélectionnés parmi
Ni en une quantité de 0,005 % ou plus et de 1,5 % ou moins,
Cu en une quantité de 0,005 % ou plus et de 1,5 % ou moins,
Cr en une quantité de 0,005 % ou plus et de 0,1 % ou moins,
P en une quantité de 0,005 % ou plus et de 0,5 % ou moins,
Mo en une quantité de 0,005 % ou plus et de 0,5 % ou moins,
Ti en une quantité de 0,0005 % ou plus et de 0,1 % ou moins,
Nb en une quantité de 0,0005 % ou plus et de 0,1 % ou moins,
V en une quantité de 0,0005 % ou plus et de 0,1 % ou moins,
B en une quantité de 0,0002 % ou plus et de 0,0025 % ou moins,
Bi en une quantité de 0,005 % ou plus et de 0,1 % ou moins,
Te en une quantité de 0,0005 % ou plus et de 0,01 % ou moins, et
Ta en une quantité de 0,0005 % ou plus et de 0,01 % ou moins ; et
le reste étant constitué de Fe et d'impuretés inévitables ;
une soumission de la brame d'acier à un laminage à chaud avec une réduction de laminage de 95 % ou plus pour obtenir une tôle d'acier laminée à chaud présentant une épaisseur de tôle de 1,5 mm à 3,5 mm ;
une action consistant à effectuer par la suite un recuit en bande chaude dans les conditions d'une température d'égalisation de 800 °C ou plus et de 1200 °C ou moins, et un temps d'égalisation de 2 s ou plus et de 300 s ou moins ;
une soumission de la tôle d'acier laminée à chaud et recuite en bande chaude à un laminage à froid une fois, ou deux fois ou plus avec un recuit intermédiaire effectué entre eux avec une température d'égalisation de 800 °C ou plus et de 1200 °C ou moins et un temps d'égalisation de 2 s ou plus et de 300 s ou moins, pour obtenir une tôle d'acier laminée à froid avec une épaisseur de tôle finale ;
une soumission de la tôle d'acier laminée à froid à un recuit de recristallisation primaire à une température d'égalisation de 700 °C ou plus et de 1000 °C ou moins, la vitesse de chauffage moyenne dans une plage de températures de 500 °C à 700 °C dans le recuit de recristallisation primaire étant de 100 °C/s ou plus ;
une application d'un séparateur de recuit à une surface de la tôle d'acier laminée à froid après soumission au recuit de recristallisation primaire ; et
une soumission par la suite de la tôle d'acier laminée à froid à un recuit de recristallisation secondaire.

2. Procédé de production d'une tôle d'acier électrique à grains orientés selon la revendication 1,
dans lequel dans la composition chimique, la quantité totale de Sn et/ou Sb est dans une plage de 0,020 % ou plus et de 0,300 % ou moins en % en masse.

3. Procédé de production d'une tôle d'acier électrique à grains orientés selon la revendication 1 ou la revendication 2,
dans lequel la composition chimique contient, en % en masse, un ou plusieurs sélectionnés parmi
Ni en une quantité de 0,005 % ou plus et de 1,5 % ou moins,
Cu en une quantité de 0,005 % ou plus et de 1,5 % ou moins,
Cr en une quantité de 0,005 % ou plus et de 0,1 % ou moins,
P en une quantité de 0,005 % ou plus et de 0,5 % ou moins,
Mo en une quantité de 0,005 % ou plus et de 0,5 % ou moins,
Ti en une quantité de 0,0005 % ou plus et de 0,1 % ou moins,
Nb en une quantité de 0,0005 % ou plus et de 0,1 % ou moins,
V en une quantité de 0,0005 % ou plus et de 0,1 % ou moins,
B en une quantité de 0,0002 % ou plus et de 0,0025 % ou moins,
Bi en une quantité de 0,005 % ou plus et de 0,1 % ou moins,
Te en une quantité de 0,0005 % ou plus et de 0,01 % ou moins, et
Ta en une quantité de 0,0005 % ou plus et de 0,01 % ou moins.

4. Procédé de fabrication d'une tôle d'acier électrique à grains orientés selon l'une quelconque des revendications 1 à 3, comprenant en outre
après le laminage à froid, une soumission de la tôle d'acier laminée à froid à un traitement de nitruration.

5. Procédé de fabrication d'une tôle d'acier électrique à grains orientés selon l'une quelconque des revendications 1 à 4,
dans lequel un ou plusieurs sélectionnés parmi du sulfure, du sulfate, du séléniure, et du sélénate sont ajoutés au séparateur de recuit.

6. Procédé de production d'une tôle d'acier électrique à grains orientés selon l'une quelconque des revendications 1 à 5, comprenant en outre
après le laminage à froid, une soumission de la tôle d'acier laminée à froid à un traitement d'affinage dans le domaine magnétique.

7. Procédé de production d'une tôle d'acier électrique à grains orientés selon la revendication 6,
dans lequel lors du traitement d'affinage dans le domaine magnétique, la tôle d'acier laminée à froid est irradiée avec un faisceau d'électrons après soumission au recuit de recristallisation secondaire.

8. Procédé de production d'une tôle d'acier électrique à grains orientés selon la revendication 6,
dans lequel lors du traitement d'affinage dans le domaine magnétique, la tôle d'acier laminée à froid est irradiée avec un laser après soumission au recuit de recristallisation secondaire.
